# DEMANDE DE BREVET EUROPEEN

(11) **EP 1 591 433 A2**
(43) Date de publication de la demande: **02.11.2005**
(21) Numéro de dépôt: 05290828.2
(22) Date de dépôt: 14.04.2005
(51) Int. Cl.: C05F 17/00, C05F 17/02

(54) **Procédé et installation de compostage de déchets verts**

(30) Priorité: 26.04.2004 FR 0404396
(71) Demandeur: Anabas, 95210 Saint Gratien (FR)
(72) Inventeur: Oliveres, Eric, 83340 Le Luc en Provence (FR)
(74) Mandataire: Colombet, Alain André

(57) **Abrégé**

L'invention concerne un procédé de valorisation de déchets verts, comprenant les étapes consistant à :
d) récupérer les lixiviats de déchets verts produits pendant le compostage ;
e) séparer la phase solide ; et
f) extraire certains composés organiques de la phase solide ainsi séparée.

Elle concerne également une installation adaptée pour sa mise en oeuvre.

## Description

La présente invention a trait à un procédé de valorisation de déchets, notamment des déchets verts.

La prise de conscience progressive des problématiques environnementales a propulsé la gestion des déchets au sommet des préoccupations.

Compte tenu de l'accroissement des zones urbaines et de la quantité de déchets, la stratégie de gestion de ces derniers face aux contraintes écologiques environnementales devient un enjeu capital.

La gestion des déchets peut se faire notamment par stockage. Cependant, ce mode de gestion peut entraîner des nuisances, en particulier une contamination toxique du milieu environnant. Par ailleurs, ce mode de gestion n'est pas en mesure d'absorber la quantité croissante de déchets.

Une autre possibilité de gestion, la transformation des déchets a pour avantage d'éviter ces inconvénients. Elle est particulièrement avantageuse lorsqu'elle permet l'obtention de produits ayant une valeur économique. Ceci est toutefois encore une exception.

Par ailleurs, certaines transformations entraînent des nuisances de moins en moins tolérables. Ainsi, l'incinération des déchets, jusqu'à présent un des modes majeurs de gestion des déchets, provoque le dégagement de substances toxiques dans les fumées d'incinération.

La gestion des déchets verts, à savoir les déchets de végétaux tels que les feuilles, bois et herbes est habituellement le compostage. Si le produit final du compostage est valorisé à titre de compost, les lixiviats, à savoir les eaux de percolation pendant le compostage, échappent cependant à tout moyen de valorisation. A l'air, les matières biodégradables se transforment en gaz carbonique et en un résidu, le compost, matière fertilisante entrant dans la catégorie des amendements organiques.

Le compostage nécessite un rapport carbone/azote déterminé dans les matières à composter, une aération suffisante et régulière, et un taux d'humidité proche de 60% en poids.

Le plus souvent, le compostage il est réalisé dans des andains, des lignes régulières de compost mis en tas, le plus souvent à l'air libre.

Ce procédé, mis en oeuvre sur des aires en bitume ou béton, comprend habituellement les opérations suivantes:
- la réception et le stockage des déchets ;
- le broyage et la constitution d'andains ;
- la fermentation avec retournements des andains ;
- la maturation avec retournements des andains ;
- le criblage ; et
- le stockage et l'écoulement du compost.

L'invention propose alors un procédé de valorisation de déchets verts, par l'extraction de certains composés organiques des lixiviats produits pendant la période de compostage.

En effet, il a été découvert que les lixiviats de déchets verts contenaient des composés organiques de valeur économique importante. Par ailleurs, il a été constaté de manière surprenante que ces composés étaient concentrés en particulier dans la phase solide des lixiviats.

Ainsi, l'invention propose selon un premier aspect un procédé de valorisation de déchets verts comprenant les étapes consistant à :
- récupérer les lixiviats de déchets verts pendant le compostage ;
- séparer la phase solide ; et
- extraire certains composés organiques de la phase solide ainsi séparée.

Plusieurs caractéristiques permettent, seules ou en combinaison, d'améliorer certains aspects du procédé, sans pour autant être obligatoires :
- après l'étape b), la phase liquide est recyclée vers le compostage ;
- les déchets verts sont broyés une ou plusieurs fois avant le compostage ;
- les déchets verts sont triés avant le compostage.

Ces déchets verts peuvent être issus de l'entretien et du renouvellement d'espaces verts. Avantageusement, les déchets verts sont issus d'espèces tropicales, comme les palmiers, les bananiers, la canne à sucre ou autre.

La phase solide du lixiviat constitue la matière première préférée pour la valorisation car elle contient de composés organiques valorisables en concentrations élevées.

Par ailleurs, il a été également constaté la phase solide du lixiviat est particulièrement enrichie en métaux lourds. De ce fait, la récupération de la phase solide est souhaitable en ce qu'elle constitue potentiellement un danger pour l'environnement.

L'invention sera expliquée plus en détail au moyen de la figure unique, laquelle montre :

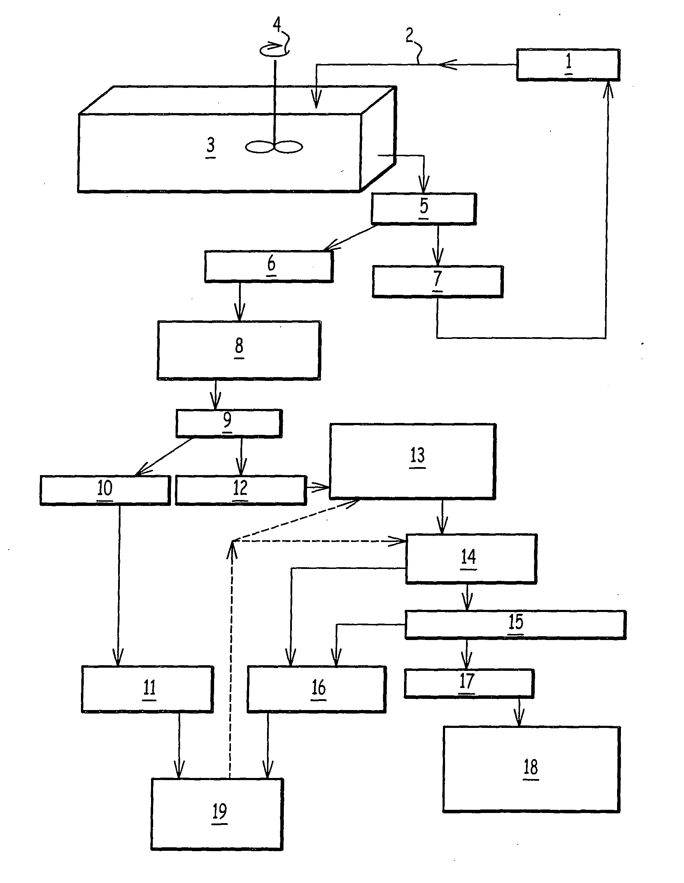

- Figure 1 :: Représentation schématique d'un mode de réalisation particulier du procédé selon l'invention.

Un mode de réalisation du procédé selon l'invention est représenté schématiquement à la figure 1.

Les andains (1) sont des amas de déchets verts en cours de compostage, desquels s'échappent des liquides de percolation, dits lixiviats (2). Selon un mode de réalisation préféré du procédé, les lixiviats (2) sont conduits dans un bassin de rétention (3), avantageusement équipé d'une moyen d'agitation (4).

La phase solide contenue dans le lixiviat est ensuite séparée de la phase liquide selon toute technique connue de l'homme du métier. Selon le mode de réalisation de la figure 1, la phase solide est récupérée par filtration (5).

Le filtrat (7) peut avantageusement être recyclé vers les andains pour la production de lixiviats, éventuellement après addition d'eau.

La phase solide du lixiviat (6) est ensuite traitée pour en extraire les composés valorisables par une méthode appropriée, par exemple par précipitation en présence d'un agent. De préférence, elle est réalisée par des solvants.

Le ou les solvants sont alors choisis en fonction de la nature du ou des composés organiques à extraire.

Les solvants peuvent être choisis parmi les hydrocarbures aliphatiques, saturés ou insaturés, droits, ramifiés ou cycliques, éventuellement substitués par des groupes comme halogène, alcoxy, ester, carbonyle, hydroxy, nitrile, carboxy, éventuellement interrompus par un ou plusieurs hétéroatomes tels que azote, oxygène ou soufre.

Notamment lorsqu'il s'agit de composés aromatiques, il peut être avantageux d'utiliser un ou plusieurs hydrocarbures aromatiques, à un ou plusieurs noyaux, éventuellement substitués comme défini ci-dessus et/ou comportant éventuellement un ou plusieurs hétéroatomes tels que azote, oxygène ou soufre tels que le toluène ou la pyridine.

Selon les composés organiques ciblés, il peut être avantageux d'utiliser un mélange de plusieurs solvants.

Dans le cas d'une extraction par solvants, le ou les composés organiques valorisables sont présents en solution dans le solvant. Le solvant peut être éliminé, par exemple par distillation ou évaporation (13).

Après extraction, la phase solide est séparée, par exemple par filtration (9). La phase solide récupérée (10) constitue un résidu riche en métaux lourds. Ces résidus (11) sont dirigés ensuite de préférence vers un traitement adapté, par exemple l'incinération ou le stockage (19).

Selon un mode de réalisation particulier, le procédé comprend en outre une étape de séparation des différents composés organiques valorisables. Cette séparation peut être réalisée par l'une des techniques connues à cet effet. La distillation fractionnée (14) constitue une méthode de choix lorsque les composés organiques diffèrent en leur point d'ébullition.

La présence dans les distillats (15) des composés organiques valorisables peut être déterminée par analyse. Si souhaité, les distillats peuvent être soumis à une purification (17), par exemple par recristallisation dans un solvant adapté.

Les résidus de la distillation (16) constituent des résidus pauvres en métaux lourds. Ils comportant une proportion élevée de composés à faible valeur ajoutée, notamment des acides aminés, sucres et hydrocarbures. Ces résidus peuvent donc être éliminés sans risque d'incidence toxique.

Avantageusement, l'énergie produite par l'incinération des résidus non valorisables est utilisée pour alimenter les étapes nécessitant l'apport d'énergie, telles que la séparation du solvant et/ou la distillation fractionnée.

Selon un deuxième aspect, l'invention a également pour objet une installation spécialement conçue pour la mise en oeuvre du procédé décrit ci-dessus.

Plus précisément, cette installation comprend :
o des moyens de captation de lixiviats de déchets verts ;
o des moyens de prélèvement des lixiviats ;
o des moyens de séparation de la phase solide des lixiviats ;
o des moyens d'extraction de composés organiques de la phase solide séparée ; et, le cas échéant,
o des moyens d'isolement et/ou de purification des composés organiques ainsi extraits.

Selon un mode de réalisation préféré, la phase liquide obtenue après séparation de la phase solide des lixiviats est recyclée, le cas échéant sous addition d'eau.

## Revendications

1. Procédé de valorisation de déchets verts, comprenant les étapes consistant à :
a) récupérer les lixiviats de déchets verts produits pendant le compostage ;
b) séparer la phase solide ; et
c) extraire certains composés organiques de la phase solide ainsi séparée,
la phase liquide étant recyclée vers le compostage après l'étape b).

2. Procédé selon la revendication 1, dans lequel les déchets verts sont broyés une ou plusieurs fois avant le compostage.

3. Procédé selon la revendication 1 ou 2, dans lequel les déchets verts sont triés avant le compostage.

4. Procédé selon l'une des revendications 1 à 3, dans lequel l'étape b) est réalisée par filtration.

5. Procédé selon l'une des revendications 1 à 4, dans lequel l'étape c) est réalisée par extraction au moyen d'un solvant.

6. Procédé selon l'une des revendications 1 à 5, comprenant en outre l'étape consistant à :
d) séparer les différents composés organiques.

7. Procédé selon la revendication 6, dans lequel l'étape d) est réalisée par distillation fractionnée.

8. Procédé selon l'une des revendications 1 à 7, comprenant en outre une étape de purification des différents composés organiques.

9. Installation pour la mise en oeuvre du procédé selon l'une des revendications 1 à 8, comprenant :
o des moyens de captation de lixiviats de déchets verts ;
o des moyens de prélèvement des lixiviats ;
o des moyens de séparation de la phase solide des lixiviats ;
o des moyens d'extraction de composés organiques de la phase solide séparée ; et, le cas échéant,
o des moyens d'isolement et/ou de purification des composés organiques ainsi extraits.

10. Installation selon la revendication 9, comprenant en outre des moyens de recyclage de la phase liquide obtenue après séparation de la phase solide des lixiviats vers les andains.
